# EUROPEAN PATENT APPLICATION

(11) **EP 4 550 014 A1**
(43) Date of publication of application: **07.05.2025**
(21) Application number: 23831607.9
(22) Date of filing: 29.06.2023
(51) Int. Cl.: G02B 5/30, B32B 7/023, G02B 27/01, G09F 9/00

(54) **TRANSLUCENT RESIN SHEET, PROJECTION DISPLAY, AND MOVING BODY**

(30) Priority: 30.06.2022 JP 2022105811
(71) Applicant: Sumitomo Bakelite Co.Ltd., Shinagawa-ku Tokyo 140-0002 (JP)
(72) Inventor: ISHIKAWA, Tetsuya, Tokyo 140-0002 (JP)
(74) Representative: Müller-Boré & Partner Patentanwälte PartG mbB
(86) International application number: PCT/JP2023/024286
(87) International publication number: WO 2024/005168

(57) **Abstract**

A translucent resin sheet of the present invention is used for a translucent cover member capable of transmitting light and includes a polarizing layer 2 and protective layers 3A and 3B, in which in a case where a content of moisture in the translucent resin sheet is defined as A [%] and a total thickness of the two protective layers 3A and 3B is defined as B [mm], a relational expression A·B (1) [mm·%] of a product between the content A and the total thickness B in a case where the translucent resin sheet is stored for 23 hours under conditions of a temperature of 25°C and a humidity of 50% Rh satisfies a relationship of 0.20 ≤ A·B (1) ≤ 0.70.

## Description

### Technical Field

The present invention relates to a translucent resin sheet, a projection type display device, and a moving body.

### Background Art

In recent years, a head-up display has been known as a projection type display device used as being mounted on a moving body such as an automobile (for example, see PTL 1).

The head-up display disclosed in PTL 1 is a device which obtains a virtual image by reflecting a display image displayed on a display device (a display unit) such as a liquid crystal display, a CRT, or the like with a mirror, and projecting the display image onto a windshield of a vehicle as a screen having a curved shape. In the head-up display, a housing that stores the display unit is provided in a dashboard, and an emission window that emits a display image is formed in the housing.

In addition, it has been proposed to dispose (mount), on this emission window, a translucent cover member (translucent resin sheet) including a polarizing layer formed of a polarizer that generates polarized light and a protective layer mainly formed of a resin material, which is laminated on both surface sides of the polarizing layer (for example, see PTL 2).

In addition, the translucent cover member having such a configuration is mounted on the emission window in a curved state in which the translucent cover member is curved such that a recessed portion is formed in the central portion after the translucent cover member is punched in accordance with the shape of the emission window provided in the housing.

However, there is a problem in that cracks occur in the translucent cover member in a case of punching out the translucent cover member according to the shape of the emission window of the translucent cover member or in a case of forming the translucent cover member into a curved state in order to form a recessed portion in the central portion.

Further, a head-up display having such a configuration is provided in a dashboard. Therefore, particularly in summer, due to the dashboard being exposed to a high temperature, the translucent cover member is discolored, and as a result, there is a problem in that a projected image (virtual image) formed on the screen (windshield) is projected on the screen in a tone different from a designed tone.

### Citation List

### Patent Literature

[PTL 1] Japanese Laid-Open Patent Publication No. 2015-49464
[PTL 2] Japanese Laid-Open Patent Publication No. 2015-55679

### Summary of Invention

### Technical Problem

An object of the present invention is to provide a translucent resin sheet in which occurrence of cracks is accurately suppressed or prevented even in a case of being punched into a predetermined shape or being deformed into a curved state and discoloration is accurately suppressed or prevented even in a case of being exposed to a high temperature, and a projection type display device and a moving body, which include the translucent resin sheet and have excellent reliability.

### Solution to Problem

Such objects can be achieved by the present invention described in the following items (1) to (11).
(1) A translucent resin sheet which is used for a translucent cover member capable of transmitting light, the sheet including: a polarizing layer that is formed of a polarizer generating polarized light of light; and a protective layer that is provided on each of both surface sides of the polarizing layer and is mainly formed of a resin material, in which in a case where a content of moisture in the translucent resin sheet is defined as A [%] and a total thickness of the two protective layers provided on both surface sides of the polarizing layer is defined as B [mm], a relational expression A·B (1) [mm·%] of a product between the content A and the total thickness B in a case where the translucent resin sheet is stored for 23 hours under conditions of a temperature of 25°C and a humidity of 50% Rh satisfies a relationship of 0.20 ≤ A·B (1) ≤ 0.70.
(2) The translucent resin sheet according to (1), in which a relational expression A·B (2) [mm·%] of a product between the content A and the total thickness B in a case where the translucent resin sheet is stored for 22 hours under conditions of a temperature of 35°C and a humidity of 20% Rh satisfies a relationship of 0.10 ≤ A·B (2) ≤ 0.42.
(3) The translucent resin sheet according to (1) or (2), in which a color change of the translucent resin sheet measured in conformity with ISO 11664-4 after the translucent resin sheet is stored for 1000 hours under conditions of a temperature of 105°C and a humidity of 0% Rh is less than ΔE 13.5.
(4) The translucent resin sheet according to any one of (1) to (3), in which the protective layer is a monolayer body mainly formed of the resin material, and the resin material is a polycarbonate-based resin.
(5) The translucent resin sheet according to any one of (1) to (4), in which the polarizing layer has a thickness of equal to or greater than 5 µm and equal to or less than 60 µm.
(6) The translucent resin sheet according to any one of (1) to (5), in which the protective layer has a thickness of equal to or greater than 0.07 mm and equal to or less than 0.80 mm.
(7) The translucent resin sheet according to any one of (1) to (6), in which the protective layer and the polarizing layer are bonded to each other via a bonding layer.
(8) The translucent resin sheet according to (7), in which the bonding layer has a thickness of equal to or greater than 0.005 mm and equal to or less than 0.04 mm.
(9) The translucent resin sheet according to any one of (1) to (8), in which the translucent resin sheet is used as a translucent cover member that transmits emitted light emitted from a projection type display device.
(10) A projection type display device including: the translucent resin sheet according to (9) as a translucent cover member.
(11) A moving body including: the projection type display device according to (10).

### Advantageous Effects of Invention

According to the present invention, it is possible to provide a translucent resin sheet including a polarizing layer formed of a polarizer, and a protective layer provided on each of both surface sides of the polarizing layer and mainly formed of a resin material. In the present invention, in a case where a content of moisture in the translucent resin sheet is defined as A [%] and a total thickness of two protective layers provided on both surface sides of the polarizing layer is defined as B [mm], a relational expression A·B (1) [mm·%] of a product between the content A and the total thickness B in a case where the translucent resin sheet is stored for 23 hours under conditions of a temperature of 25°C and a humidity of 50% Rh satisfies a relationship of 0.20 ≤ A·B (1) ≤ 0.70. Therefore, for example, even in a case where a translucent resin sheet is punched out in accordance with the shape of the emission window provided in the housing of the projection type display device as a translucent cover member that transmits emitted light emitted from the projection type display device, and the translucent resin sheet is mounted in a curved state in accordance with the emission window, occurrence of cracks in the translucent resin sheet (translucent cover member) can be accurately suppressed or prevented. Further, even in a case where the projection type display device is exposed to a high temperature, such as a dashboard in summer, the translucent resin sheet (translucent cover member) can accurately suppress or prevent discoloration. Therefore, the emitted light transmitted through the translucent cover member can be reliably projected onto a screen in a designed tone.

### Brief Description of Drawings

FIG. 1 is a side view showing an embodiment of a head-up display of an automobile, which includes a translucent resin sheet of the present invention as a translucent cover member.
FIG. 2 is an enlarged cross-sectional view showing a region [A] surrounded by a long dashed short dashed line of FIG. 1.
FIG. 3 is an enlarged cross-sectional view of the translucent resin sheet according to the present invention applied to the translucent cover member in FIG. 2.

### Description of Embodiments

Hereinafter, a translucent resin sheet, a projection type display device, and a moving body of the present invention will be described in detail based on suitable embodiments illustrated in the accompanying drawings.

First, prior to the description of a translucent resin sheet and a moving body of the present invention, a head-up display (projection type display device) of an automobile, which includes the translucent resin sheet of the present invention as a translucent cover member will be described. That is, a head-up display to which the projection type display device of the present invention is applied will be described.

### <Head-up display>

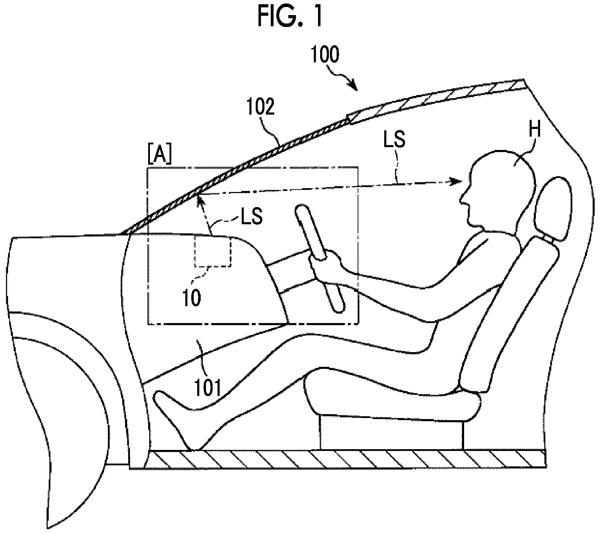

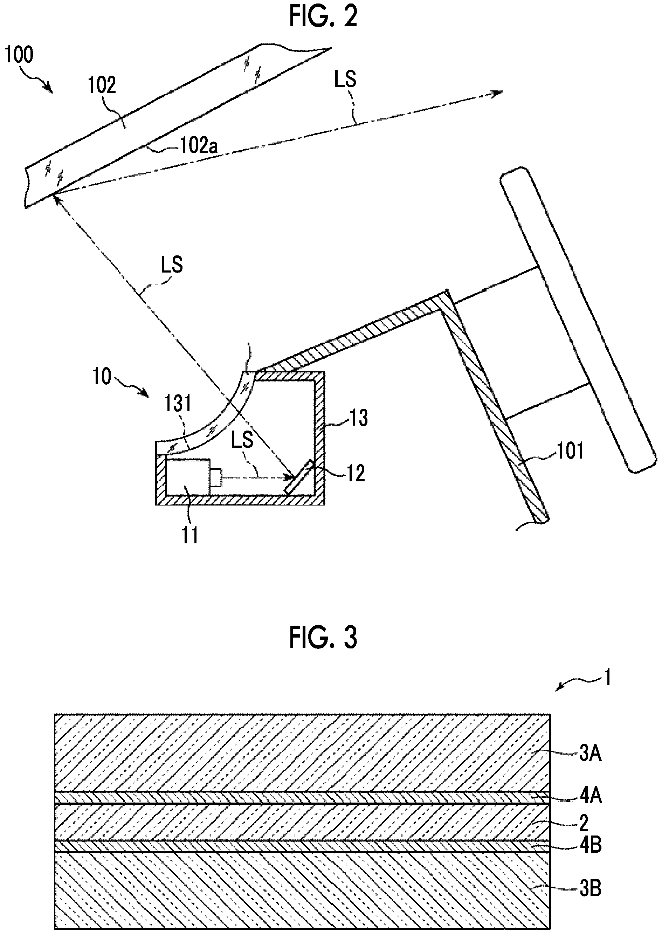

FIG. 1 is a side view showing an embodiment of a head-up display of an automobile including a translucent resin sheet of the present invention as a translucent cover member, FIG. 2 is an enlarged cross-sectional view showing a region [A] surrounded by a long dashed short dashed line in FIG. 1, and FIG. 3 is an enlarged cross-sectional view showing the translucent resin sheet of the present invention applied to the translucent cover member in FIG. 2. Hereinafter, in FIGS. 1 to 3, an upper side will be referred to as "upper" or "upward", and a lower side will referred to as "lower" or "downward" for convenience of explanation. In addition, in FIGS. 1 and 2, a left side will be referred to as "front" or "forward", and a right side will be referred to as "rear" or "backward". In addition, in FIG. 3, a translucent cover member is shown in a flat state, and a thickness direction is exaggerated and schematically shown in order to facilitate understanding.

As shown in FIG. 1, a head-up display 10 is used by being mounted on an automobile 100. The head-up display 10 is incorporated in an upper portion of a dashboard 101 of the automobile 100.

As shown in FIG. 2, the head-up display 10 includes a display unit 11, a reflective member 12, and a storage body 13.

In the present embodiment, the display unit 11 is formed of a liquid crystal display, and emits a display image LS as emitted light. The display unit 11 is configured to emit light of each of colors of red (R), green (G), and blue (B) constituting each pixel in the display image LS so that a full-color display image LS is formed.

The reflective member 12 is formed of, for example, a mirror and can reflect the display image LS from the display unit 11. The display image LS reflected by the reflective member 12 is projected onto a rear surface (an inner surface) 102a of a windshield 102 using the windshield 102 as a screen. Further, the projection light is recognized by a driver H as the display image LS (see FIGS. 1 and 2).

As shown in FIG. 2, the storage body 13 (housing) has a box shape, and the display unit 11, the reflective member 12, and other components constituting the head-up display 10 are stored inside the storage body 13. In addition, the storage body 13 includes a window portion 131 formed of an opening portion that is open toward a side of the windshield 102. The display image LS is emitted as emitted light to the outside of the storage body 13, that is, toward the windshield 102 through the window portion 131.

In addition, in the window portion 131 of the storage body 13, a translucent cover member 1 having translucency is installed (mounted) to cover the window portion 131 in a curved state in which the translucent cover member 1 is curved such that a portion on a side of the storage body 13 is a projection and a portion on a side of the windshield 102 is a recess by forming a recessed portion at a central portion. Accordingly, the display image LS can be emitted toward the windshield 102, and it is possible to prevent foreign substances such as dust from entering the inside of the storage body 13 through the window portion 131. Therefore, it is possible to prevent the display image LS of the display unit 11 or the reflective member 12 from being cloudy or dirty due to the foreign substances. In addition, the translucent cover member 1 is easily reflected by the sunlight by allowing the translucent cover member 1 to be in the curved state where the recessed portion is formed, and thus entrance of the sunlight into the storage body 13 can be accurately suppressed. In addition, for example, it is possible to prevent the translucent cover member 1 from protruding from the dashboard 101, and thus it is possible to prevent the translucent cover member 1 from blocking the viewing field of the driver H.

The translucent cover member 1 is formed of a translucent resin sheet of the present invention that can transmit light and provided with a polarizing layer 2 formed of a polarizer that generates polarized light of the light, and protective layers 3A and 3B that are provided on each of both surface sides of the polarizing layer 2 and are mainly formed of a resin material. In addition, in a case where the content of moisture (moisture content) in the translucent resin sheet (translucent cover member 1) is defined as A [%] and the total thickness of the protective layers 3A and 3B is defined as B [mm], a relational expression A·B (1) [mm·%] of a product between the content A and the total thickness B in a case where the translucent resin sheet (translucent cover member 1) is stored for 23 hours under conditions of a temperature of 25°C and a humidity of 50% Rh satisfies a relationship of 0.20 ≤ A·B (1) ≤ 0.70.

In this manner, the translucent resin sheet is punched out in accordance with the shape of the window portion 131 (emission window) provided in the storage body 13 (housing) of the head-up display 10 (projection type display device) as the translucent cover member 1 by forming the translucent cover member 1 with the translucent resin sheet of the present invention, which has translucency. Further, as shown in FIG. 2, even in a case where the translucent resin sheet is mounted in a curved state in accordance with the window portion 131, it is possible to accurately suppress or prevent the occurrence of cracks in the translucent cover member 1. Further, due to the dashboard 101 being exposed to a high temperature in summer, the head-up display 10 provided in the dashboard 101 is also exposed to a high temperature. However, even in a case where the head-up display 10 (the translucent cover member 1) is exposed to a high temperature, it is possible to accurately suppress or prevent discoloration in the translucent cover member 1. Therefore, the display image LS (emitted light) emitted from the display unit 11 can be reliably projected on the rear surface 102a of the windshield 102 as a screen in the designed tone.

Hereinafter, the translucent cover member 1, that is, each layer constituting the translucent resin sheet of the present invention will be described.

As shown in FIG. 3, the translucent cover member 1 is capable of transmitting light, and in the present embodiment, the translucent cover member 1 is a laminated plate including a polarizing layer 2, a bonding layer 4A, a bonding layer 4B, a protective layer 3A, and a protective layer 3B. Each layer will be described below.

### (Polarizing layer 2)

The polarizing layer 2 is an interlayer positioned at the center of the translucent cover member 1 (translucent resin sheet) in the thickness direction, and the thickness thereof is a constant portion in the plane direction of the translucent cover member 1.

The polarizing layer 2 has a function as a polarizer that extracts linearly polarized light having a polarization plane in a predetermined direction from light passing through the translucent cover member 1. In this manner, the light passing through the translucent cover member 1 is polarized light.

In addition, the degree of polarization of the polarizing layer 2 is desirably as close to 100% as possible, and specifically, is preferably equal to or greater than 80.0% and equal to or less than 98.0% and more preferably equal to or greater than 85.0% and equal to or less than 98.0%. In this manner, the polarizing layer 2 can be made to reliably exhibit the function as a polarizer.

Such a polarizing layer 2 is not particularly limited as long as the polarizing layer has the above-described function, but examples thereof include a film obtained by adsorbing and dyeing a polymer film formed of polyvinyl alcohol (PVA), partially formalized polyvinyl alcohol, polyethylene vinyl alcohol, polyvinyl butyral, polycarbonate, and partially saponified product of ethylene-vinyl acetate copolymer with a dichroic substance such as iodine and a dichroic dye, and uniaxially stretching the polymer film, and a polyene-based alignment film such as a dehydrated product of polyvinyl alcohol and a dechlorinated product of polyvinyl chloride.

Among these, the polarizing layer 2 is preferably a film obtained by adsorbing and dyeing a polymer film having polyvinyl alcohol (PVA) as a main material with iodine or a dichroic dye and uniaxially stretching the film. The polyvinyl alcohol (PVA) is a material that is excellent in all of transparency, heat resistance, affinity with iodine or a dichroic dye which is a dyeing agent, and aligning properties during stretching. Therefore, the polarizing layer 2 containing PVA as a main material has excellent heat resistance and an excellent polarizing ability.

Further, the polymer film is dyed with a dichroic dye or the like and then dried, but the translucent cover member 1 in which a relationship of 0.20 ≤ A·B (1) ≤ 0.70 is satisfied can be relatively easily obtained by appropriately setting the drying conditions.

In addition, the dichroic dye is not particularly limited, and examples thereof include Brilliant Blue 6B, Solophenyl Blue FGLE 220%, Solophenyl Blue GL 250%, Kayacelon Blue C-2R, Chloroazol Black BH, Direct Paper Blue STL, Solarus Rubine BLN, TOA Scarlet 4BS, EVERPULP ORENGE 2G, Hamadai Paper Yellow R 125%, Direct Fast Orange S Conk, Benzopurpurine, Diacotton Fast Orange WS, Direct Fast Orange S, AIZEN Primula Scarlet GSH, and JAPANSOL FAST BLACK D conc, and these may be used alone or in combination of two or more kinds thereof.

Further, in the present specification, the term "main material" denotes a constituent material contained in an amount of equal to or greater than 50% by weight among constituent materials constituting a layer containing the main material.

The thickness of the polarizing layer 2 is not particularly limited, and is, for example, preferably equal to or greater than 5 µm and equal to or less than 60 µm and more preferably equal to or greater than 10 µm and equal to or less than 40 µm. In a case where the thickness thereof is less than the above-described lower limits, the polarizing layer 2 may not sufficiently function as a polarizer, and even in a case where the thickness exceeds the above-described upper limits, the improvement in the function as a polarizer cannot be expected.

The refractive index of the polarizing layer 2 is not particularly limited, and is, for example, preferably equal to or greater than 1.50 and equal to or less than 1.60 and more preferably equal to or greater than 1.52 and equal to or less than 1.55.

### (Protective layers 3A and 3B)

In addition, as shown in FIG. 3, the protective layer 3A is disposed on the upper surface side of the polarizing layer 2, and the protective layer 3B is disposed on the lower surface side of the polarizing layer 2. In this manner, the polarizing layer 2 is protected, and a function as a water vapor barrier layer that prevents water vapor (moisture) from reaching the polarizing layer 2 is exhibited.

These protective layers 3A and 3B are not particularly limited, and for example, a monolayer body in which a resin material such as a polyamide-based resin, a polycarbonate-based resin, or a cellulose-based resin such as triacetyl cellulose is used as a main material can be used, and one or two or more of these can be used in combination. Among these, it is preferable that a polyamide-based resin or a polycarbonate-based resin may be used as a main material and more preferable that a polycarbonate-based resin is used as a main material.

Since the polycarbonate-based resin has high mechanical strength such as transparency (translucency) and rigidity, the transparency and impact resistance of the translucent cover member 1 can be improved. In addition, it can be said that the water vapor barrier properties of the resin materials are excellent in order of a polycarbonate-based resin, a polyamide-based resin, and a cellulose-based resin, and the polycarbonate-based resin is particularly excellent in the water vapor barrier properties, and thus the translucent cover member 1 that relatively easily satisfies the relationship of 0.20 ≤ A·B (1) ≤ 0.70 can be obtained.

The polyamide-based resin is not particularly limited, and various resins can be used, and examples thereof include alicyclic polyamide and semi-aromatic polyamide. The alicyclic polyamide is a material having excellent impact resistance. Therefore, the translucent cover member 1 can exhibit excellent impact resistance. In addition, the semi-aromatic polyamide is a material having a high elastic modulus. Therefore, the translucent cover member 1 having excellent resistance to a stress such as bending can be obtained.

Further, in the present specification, the semi-aromatic polyamide denotes polyamide in which one of a dicarboxylic acid or a diamine as a monomer constituting the polyamide is an aromatic compound and the other is an aliphatic compound, and can be specifically represented by Formula (1B).

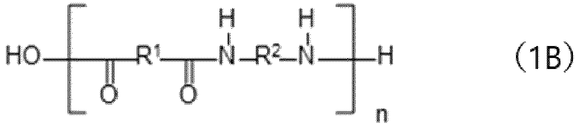

(Here, one of R¹ and R² in Formula (1B) represents a divalent aromatic substituent, and the other represents a divalent aliphatic substituent, and n represents an integer of equal to or greater than 2.)

Further, the polyamide may be a copolymer (a random copolymer, a block copolymer, or the like) containing two or more kinds of monomers for at least one of a dicarboxylic acid or a diamine.

In addition, the aromatic substituent as R¹ or R² in Formula (1B) is preferably a group represented by Formula (2B).

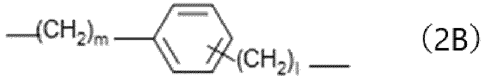

(Here, in Formula (2B), l and m each independently represent an integer of equal to or greater than 0 and equal to or less than 2.)

In this manner, the polarizing layer 2 can be more suitably protected, and the workability of the translucent cover member 1 can be further improved. In addition, in a case where a retardation is imparted to the protective layers 3A and 3B, the retardation of the protective layers 3A and 3B can be more easily controlled by stretching.

The aliphatic substituent as R¹ or R² in Formula (1B) is preferably a group having equal to or more than 4 and equal to or less than 18 carbon atoms, more preferably a hydrocarbon group having equal to or more than 4 and equal to or less than 18 carbon atoms, and still more preferably a saturated hydrocarbon group having equal to or more than 4 and equal to or less than 18 carbon atoms.

In this manner, the workability of the translucent cover member 1 can be further improved.

Further, the semi-aromatic polyamide is preferably a compound containing an aromatic dicarboxylic acid and an aliphatic diamine as constitutional monomers. In this manner, the polarizing layer 2 can be more suitably protected, and the workability of the translucent cover member 1 can be further improved. In addition, the retardation can be more easily controlled by stretching.

The alicyclic polyamide has an alicyclic chemical structure in a molecule thereof, and may have an alicyclic chemical structure in the main chain structure or in a side chain structure.

Examples of the alicyclic polyamide include a compound in which at least one of a dicarboxylic acid or a diamine serving as a monomer constituting the polyamide has an alicyclic chemical structure, and specifically, the alicyclic polyamide can be represented by, for example, Formula (3B).

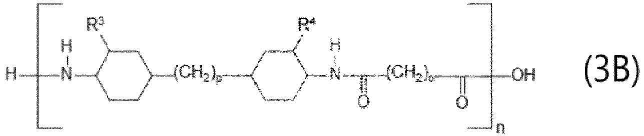

(Here, in Formula (3B), R³ and R⁴ each independently represent a hydrogen atom or a hydrocarbon group having 4 or less carbon atoms, o represents an integer of equal to or greater than 2 and equal to or less than 14, p represents an integer of equal to or greater than 0 and equal to or less than 6, and n represents an integer of equal to or greater than 2.)

The polycarbonate-based resin is not particularly limited, and various resins can be used. Among these, an aromatic polycarbonate-based resin is preferable. The aromatic polycarbonate-based resin has an aromatic ring in the main chain thereof, and thus, the strength of the translucent cover member 1 can be further improved.

The aromatic polycarbonate-based resin is synthesized, for example, by an interfacial polycondensation reaction between bisphenol and phosgene, an ester exchange reaction between bisphenol and diphenyl carbonate, or the like.

Examples of the bisphenol include bisphenol A and a bisphenol (modified bisphenol) serving as an origin of a repeating unit of a polycarbonate represented by Formula (1A).

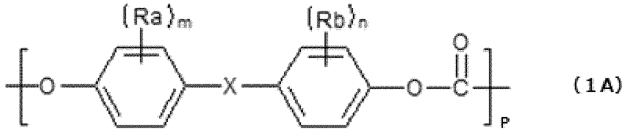

(In Formula (1A), X represents an alkyl group having 1 to 18 carbon atoms, an aromatic group, or a cyclic aliphatic group, Ra and Rb each independently represent an alkyl group having 1 to 12 carbon atoms, m and n each represent an integer of 0 to 4, and p represents the number of repeating units)

Specific examples of the above-described bisphenol serving as the origin of the repeating unit of the polycarbonate represented by Formula (1A) include 4,4'-(pentane-2,2-diyl)diphenol, 4,4'-(pentane-3,3-diyl)diphenol, 4,4'-(butane-2,2-diyl)diphenol, 1,1'-(cyclohexanediyl)diphenol, 2-cyclohexyl-1,4-bis(4-hydroxyphenyl)benzene, 2,3-biscyclohexyl-1,4-bis(4-hydroxyphenyl)benzene, 1,1'-bis(4-hydroxy-3-methylphenyl)cyclohexane, and 2,2'-bis(4-hydroxy-3-methylphenyl) propane, in which one or two or more kinds thereof can be used in combination.

As the polycarbonate-based resin, a bisphenol-type polycarbonate-based resin having a skeleton derived from bisphenol is particularly preferably used as a main component. The translucent cover member 1 can exhibit more excellent strength by using such a bisphenol-type polycarbonate-based resin.

In addition, the protective layers 3A and 3B may contain other components in addition to the resin material contained as the main material. Such a component is not particularly limited, and examples thereof include a resin material other than the main material, a colorant such as a dye, a filler, an alignment aid, a stabilizer (a thermal stabilizer, an ultraviolet absorber, an antioxidant, and the like), a plasticizer, a colorant, a flame retardant, an antistatic agent, and a viscosity adjuster.

In this case, the content of the resin material in the protective layers 3A and 3B is not particularly limited, but is preferably equal to or greater than 75 parts by mass and more preferably equal to or greater than 85 parts by mass with respect to 100 parts by mass of the protective layers 3A and 3B. In a case where the content of the resin material is set to be in the above-described ranges, the translucent cover member 1 having excellent strength can be obtained.

Further, the constituent materials constituting the protective layers 3A and 3B may be the same as or different from each other.

Further, in a case where the protective layers 3A and 3B exhibit a retardation (phase difference; birefringence × thickness), it is preferable that the retardation of the protective layer 3A and the retardation of the protective layer 3B are different from each other and preferable that the retardation of the protective layer 3A is less than the retardation of the protective layer 3B.

As a result, the protective layer 3B is likely to be deformed in a direction in which the bending curvature is reduced due to thermal contraction, but the protective layer 3A can be made less likely to be deformed due to thermal contraction. Therefore, as shown in FIG. 2, the translucent resin sheet is applied to the translucent cover member 1 provided in the head-up display 10, and thus the translucent cover member 1 is used in a curved state in which the translucent cover member 1 is curved. In this case, it is preferable that the translucent cover member 1 is in a curved state in which the protective layer 3B is positioned on a curved projected surface side and the protective layer 3A is positioned on a curved recessed surface side. In this case, the protective layer 3B has a relatively high thermal contraction rate and thus is likely to be deformed by heat, but in the translucent cover member 1, the protective layer 3A exhibits a function of suppressing the thermal deformation of the protective layer **3B.** Therefore, it is possible to prevent excessive deformation by heat as the entire translucent cover member **1.** As a result, it is possible to accurately suppress or prevent the thermal deformation of the translucent cover member 1 due to the exposure of the dashboard 101 to a high temperature in summer.

The retardation of the protective layer 3A is preferably equal to or greater than 0 nm and equal to or less than 500 nm and more preferably equal to or greater than 50 nm and equal to or less than 350 nm. The retardation of the protective layer 3B is preferably equal to or greater than 2600 nm and equal to or less than 8000 nm and more preferably equal to or greater than 3500 nm and equal to or less than 6500 nm. In this manner, the retardation of the protective layer 3A can be sufficiently reduced, and the retardation of the protective layer 3B can be sufficiently increased. Therefore, the effect obtained by setting the retardation of the protective layer 3A to be less than the retardation of the protective layer 3B can be more remarkably exhibited. In addition, the polarization performance of the translucent cover member 1 can be sufficiently increased.

Further, a difference in the retardation between the protective layers 3A and 3B can be exhibited by making the constituent materials contained in the layers, the thicknesses, the stretching ratios, and the like different from each other.

The stretching ratio of the protective layer 3A is not particularly limited, but is preferably, for example, equal to or greater than 0.95 and equal to or less than 1.1 such that the size of the retardation is set. The stretching ratio of the protective layer 3B is not particularly limited, but is preferably equal to or greater than 1.5 and equal to or less than 3.5 such that the size of the retardation is set.

In addition, it is preferable that stretching directions of the protective layer 3A, the protective layer 3B, and the polarizing layer 2 match each other. In this manner, the polarization performance of the translucent cover member 1 can be further improved.

The thicknesses of the protective layers 3A and 3B are, for example, preferably equal to or greater than 0.07 mm and equal to or less than 0.80 mm, more preferably equal to or greater than 0.10 mm and equal to or less than 0.50 mm, and still more preferably equal to or greater than 0.12 mm and equal to or less than 0.35 mm. By setting the thicknesses of the protective layers 3A and 3B to be in the above-described ranges, the protective layers 3A and 3B can be made to reliably exhibit a function of protecting the polarizing layer 2. Therefore, in a case where the translucent cover member 1 is mounted in a curved state in which the translucent cover member 1 is curved to cover the window portion 131 of the storage body 13, the translucent cover member 1 can be made to reliably exhibit a function as a cover member that covers the window portion 131. In addition, the translucent cover member 1 that relatively easily satisfies the relationship of 0.20 ≤ A·B (1) ≤ 0.70 can be obtained.

In addition, the thicknesses of the protective layer 3A and the protective layer 3B may be the same as or different from each other as long as the translucent cover member 1 satisfies the relationship of 0.20 ≤ A·B (1) ≤ 0.70.

Further, the refractive indices of the protective layers 3A and 3B are not particularly limited, but are, for example, preferably equal to or greater than 1.45 and equal to or less than 1.66 and preferably equal to or greater than 1.48 and equal to or less than 1.60.

In the present embodiment, the protective layers 3A and 3B are each formed of a monolayer body in which a resin material is used as a main material, but the present invention is not limited thereto. The protective layers 3A and 3B may be each formed of a laminate having a configuration in which a first layer and a second layer each formed of a resin material as a main material are provided and the first layer and the second layer are bonded to each other with a bonding layer.

### (Bonding layers 4A and 4B)

In addition, the polarizing layer 2 and the protective layer 3A are bonded to each other via the bonding layer 4A, and the polarizing layer 2 and the protective layer 3B are bonded to each other via the bonding layer 4B.

The bonding layer 4A and the bonding layer 4B are various adhesives or pressure sensitive adhesives such as urethane adhesives, epoxy adhesives, acrylic adhesives, and acrylic pressure sensitive adhesives. In this manner, the layers can be reliably bonded to each other so that the translucent cover member 1 that can withstand long-term use can be obtained.

The thicknesses of the bonding layers 4A and 4B are not particularly limited, and are, for example, preferably equal to or greater than 0.005 mm and equal to or less than 0.04 mm and more preferably equal to or greater than 0.006 mm and equal to or less than 0.015 mm. In a case where the thicknesses of the bonding layers 4A and 4B are less than the above-described lower limits, a decrease in adhesive force may occur, and in a case where the thicknesses of the bonding layers 4A and 4B exceed the upper limits, the translucent cover member 1 may be distorted due to curing and contraction of the bonding layers 4A and 4B depending on the kind of the adhesive or the pressure sensitive adhesive. In addition, the thicknesses of the bonding layers 4A and 4B may be different from each other, but are preferably the same as each other.

The refractive indices of the bonding layer 4A and the bonding layer 4B are not particularly limited, and are, for example, preferably equal to or greater than 1.46 and equal to or less than 1.55 and more preferably equal to or greater than 1.461 and equal to or less than 1.545.

In the translucent cover member 1 (translucent resin sheet) having such a configuration, there are the following problems as described below, as in the above-described background technology.

That is, there is a problem in that cracks occur in the translucent cover member 1 in a case of punching out the translucent cover member 1 (translucent resin sheet) in accordance with the shape of the window portion 131 (emission window) provided in the storage body 13 (housing) of the head-up display 10 (projection type display device) or in a case of allowing the translucent cover member 1 to be in a curved state in order to form a recessed portion in the central portion. Further, the head-up display 10 is provided in the dashboard 101 of the automobile 100, and particularly, since the translucent cover member 1 is also similarly heated due to the dashboard 101 being exposed to a high temperature in summer, the translucent cover member 1 is discolored, and as a result, there is a problem in that the display image LS (projected image) formed on the rear surface 102a of the windshield 102 as a screen is projected on the rear surface 102a in a tone different from a designed tone.

In order to solve such problems, the present inventors have conducted intensive examination, and have found that these problems are related to the moisture content in the translucent cover member 1, particularly, the polarizing layer 2. More specifically, it has been found that in a case where the moisture content in the translucent cover member 1 (polarizing layer 2) is extremely low, the cracks occur in the translucent cover member 1, and in a case where the moisture content in the translucent cover member 1 (polarizing layer 2) is extremely high, the discoloration occurs in the translucent cover member 1 in a case where the translucent cover member 1 is exposed to a high temperature.

Further, as a result of further examination on the moisture content in the translucent cover member 1 (polarizing layer 2), the present inventors have found that the moisture content in the translucent cover member 1 (particularly, the polarizing layer 2) over a long period of time is closely related to the moisture content of the entire translucent cover member 1 and the thicknesses of the protective layers 3A and 3B. Specifically, the present inventors have found that in a case where the content A of moisture in the translucent cover member 1 (translucent resin sheet) is defined as A [%] and the total thickness of the protective layers 3A and 3B is defined as B [mm], the above-described problems can be solved by allowing the relational expression A·B (1) [mm·%] of a product between the content A and the total thickness B in a case where the translucent cover member 1 (translucent resin sheet) is stored for 23 hours under conditions of a temperature of 25°C and a humidity of 50% Rh to satisfy the relationship of 0.20 ≤ A·B (1) ≤ 0.70, thereby completing the present invention.

That is, in a case where the relational expression A·B (1) [mm·%] satisfies the relationship of 0.20 ≤ A·B (1), it is possible to accurately suppress or prevent cracks from occurring in the translucent cover member 1 in a case of punching the translucent cover member 1 (translucent resin sheet) in accordance with the shape of the window portion 131 (emission window) provided in the storage body 13 (housing) of the head-up display 10 (projection type display device) or in a case of allowing the translucent cover member 1 to be in a curved state in order to form a recessed portion in the central portion.

Further, due to the dashboard 101 being exposed to a high temperature in summer, the head-up display 10 provided in the dashboard 101 is also exposed to a high temperature. However, since the relational expression A·B (1) [mm·%] satisfies the relationship of A·B (1) ≤ 0.70, even in a case where the head-up display 10 (translucent cover member 1) is exposed to a high temperature, discoloration in the translucent cover member 1 can be accurately suppressed or prevented. Therefore, the display image LS (emitted light) emitted from the display unit 11 can be reliably projected on the rear surface 102a of the windshield 102 as a screen in the designed tone.

Further, in consideration of the water vapor barrier for the polarizing layer 2, it is presumed that not only the thicknesses of the protective layers 3A and 3B laminated on the polarizing layer 2 but also the thicknesses of the bonding layers 4A and 4B are related to the water vapor barrier for the polarizing layer 2, but in consideration of the relationship between the constituent materials contained in the protective layers 3A and 3B and the bonding layers 4A and 4B, and the thicknesses of the protective layers 3A and 3B and the bonding layers 4A and 4B, it is considered that it is a proper determination as the basis for parameter setting to define the size of the relational expression A·B (1) by excluding the thicknesses of the bonding layers 4A and 4B and defining the total thickness of the protective layers 3A and 3B as B [mm].

In addition, a moisture content in the translucent cover member 1 is, for example, preferably equal to or greater than 0.150% and equal to or less than 1.800%, more preferably equal to or greater than 0.200% and equal to or less than 1.200%, and still more preferably equal to or greater than 0.400% and equal to or less than 1.000%. In this manner, the translucent cover member 1 that satisfies the relationship of 0.20 ≤ A·B (1) ≤ 0.70 can be relatively easily obtained.

Further, the moisture content A (water vapor content) [%] in the translucent cover member 1 can be measured, for example, using a moisture content measuring device ("AQUATRACK 3E", manufactured by ITSJAPAN CO., LTD.).

In addition, the relational expression A·B (1) [mm·%] may satisfy a relationship of 0.20 ≤ A·B (1) ≤ 0.70, but it is preferable to satisfy a relationship of 0.23 ≤ A·B (1) ≤ 0.52 and more preferable to satisfy a relationship of 0.23 ≤ A·B (1) ≤ 0.38. In a case where A·B (1) is set to be in the above-described ranges, the effects can be more remarkably exhibited. Further, in a case where it is desired to suppress cracks during the molding of the translucent cover member 1 to a minimum while suppressing discoloration of the translucent cover member 1 during exposure to a high temperature to a level at which the translucent cover member 1 can practically withstand discoloration, a relationship of 0.42 ≤ A·B (1) ≤ 0.65 is preferable, and a relationship of 0.46 ≤ A·B (1) ≤ 0.60 is more preferable in consideration of the balance therebetween.

Further, it is preferable that a relational expression A·B (2) [mm/%] of a product between the moisture content A and the total thickness B in a case where the translucent cover member 1 is stored under different conditions, such as 22 hours, under conditions of a temperature of 35°C and a humidity of 20% Rh, satisfies a relationship of 0.10 ≤ A·B (2) ≤ 0.42 and more preferable that the relational expression A·B (2) satisfies a relationship of 0.17 ≤ A·B (2) ≤ 0.30. By setting the relational expression A·B (2) to be in the above-described ranges, the effects obtained by setting A·B (1) to be in the above-described ranges can be more remarkably exhibited. Further, in a case where it is desired to suppress cracks during the molding of the translucent cover member 1 to a minimum while suppressing discoloration of the translucent cover member 1 during exposure to a high temperature to a level at which the translucent cover member 1 can practically withstand discoloration, a relationship of 0.32 ≤ A·B (2) ≤ 0.41 is preferable, and a relationship of 0.33 ≤ A·B (2) ≤ 0.40 is more preferable in consideration of the balance therebetween.

Further, in a case where the relational expression A·B (1) [mm·%] satisfies the relationship, discoloration of the translucent cover member 1 can be accurately suppressed or prevented even in a case where the translucent cover member 1 is exposed to a high temperature, and specifically, after storing the translucent cover member 1 (translucent resin sheet) under the conditions of a temperature of 105°C and a humidity of 0% Rh for 1000 hours, a color change of the translucent cover member 1 measured in conformity with ISO 11664-4 is preferably less than ΔE 13.5, more preferably less than ΔE 12.0, and still more preferably less than ΔE 10.6. In this manner, the discoloration of the translucent cover member 1 can be accurately suppressed or prevented even in a case where the translucent cover member 1 is exposed to a high temperature.

Further, a color change [ΔE] of the translucent cover member 1 can be calculated based on the color value (L*a*b*) measured at a viewing angle of 2° using a D65 light source in conformity with ISO 11664-4 (JIS Z 8781-4).

Hereinbefore, the translucent resin sheet, the projection type display device, and the moving body of the present invention have been described, but the present invention is not limited thereto.

For example, each unit constituting the projection type display device and the moving body of the present invention can be replaced with any configuration that can exhibit the same function.

In addition, in the embodiment, the case where the translucent resin sheet of the present invention includes the polarizing layer 2, and the protective layers 3A and 3B laminated on the polarizing layer 2, and the polarizing layer 2 and the protective layers 3A and 3B are bonded to each other via the bonding layers 4A and 4B has been described, but the present invention is not limited thereto. For example, the translucent resin sheet may include an interlayer provided at least one of between the polarizing layer 2 and the bonding layers 4A and 4B or between the protective layers 3A and 3B and the bonding layers 4A and 4B, or may include an outermost layer such as a hard coat layer, which is laminated on at least one of the protective layer 3A or 3B. A material different from the protective layer can be used as the interlayer.

Further, in the embodiment, the case where the projection type display device of the present invention is applied to the head-up display 10 provided in the automobile 100 as the moving body has been described, but the moving body to which the head-up display 10 is applied is not limited to the automobile 100, and examples thereof include a ship, a railway vehicle, an airplane, a bus, a motorcycle, a bicycle, a forklift, a work vehicle that performs predetermined work at a construction site, and a golf cart.

In addition, the translucent resin sheet of the present invention is not limited to the application as the translucent cover member of the head-up display described above, and can also be applied to a lens of eyewear such as glasses or sunglasses. For example, the translucent resin sheet of the present invention can be punched into a shape of a lens, and a translucent resin sheet that is allowed to be in a curved state in accordance with the lens can be mounted on the lens surface and used.

### [Examples]

Hereinafter, the present invention will be described in detail based on examples. The present invention is not limited to these examples.

### 1. Preparation of various films

First, various films used for producing translucent resin sheets of each of examples and comparative examples are described below.

### (PVA film)

As a polyvinyl alcohol (PVA) film, KURARAY VINYLON #7500 (manufactured by Kuraray Co., Ltd.) was prepared.

### (Protective film 1)

A polycarbonate resin sheet (thickness: 0.325 mm) was prepared as a protective film 1.

### (Protective film 2)

A polycarbonate resin sheet (thickness: 0.250 mm) was prepared as a protective film 2.

### (Protective film 3)

A polycarbonate resin sheet (thickness: 0.125 mm) was prepared as a protective film 3.

### (Protective film 4A)

A polyamide resin sheet (thickness: 0.400 mm) was prepared as a protective film 4A.

### (Protective film 4B)

As the protective film 4B, a polyamide resin sheet (thickness: 0.200 mm) was prepared.

### (Protective film 5)

As a protective film 5, a triacetyl cellulose resin sheet (thickness: 0.080 mm) was prepared.

### 2. Production of translucent resin sheet

### (Example 1)

<1> First, the PVA film was dyed for 10 minutes under a condition of 40°C in an aqueous solution (4 g/L of Brilliant Blue 6B, 2 g/L of benzopurpurine, and 1 g/L of JAPANSOL FAST BLACK D conc.) in which a dichroic dye was dissolved while the PVA film was stretched in a dyeing device equipped with a swelling tank, a dyeing tank, a crosslinking tank, and a dryer, and then crosslinked with boric acid and dried for 5 minutes under a condition of 80°C and 0% Rh, thereby forming a polarizing layer 2.
<2> Next, the protective film 1 was pressure-bonded to both surfaces of the obtained polarizing layer 2 as protective layers 3A and 3B via a one-part moisture-curable polyurethane-based adhesive, thereby preparing a translucent resin sheet of Example 1 having a total thickness of 0.7 mm.

### (Examples 2 to 5, 8, and 9)

Translucent resin sheets of Examples 2 to 5, 8, and 9 were obtained in the same manner as in Example 1 except that the layer configuration listed in Table 1 was used for the combination of the protective films pressure-bonded as the protective layers 3A and 3B in the step <2>.

### (Examples 6 and 7 and Comparative Examples 1 and 2)

Translucent resin sheets of Examples 6 and 7 and Comparative Examples 1 and 2 were obtained in the same manner as in Example 1 except that the conditions for obtaining the polarizing layer 2 by drying were changed to the conditions listed in Table 1 in the step <1>.

### (Example 10)

A translucent resin sheet of Example 10 was obtained in the same manner as in Example 1 except that the drying of the polarizing layer 2 in the step <1> was omitted.

### 3. Evaluation

The translucent resin sheets of each example and each comparative example were evaluated by the following method.

### <A> Calculation of relational expression A·B (1)

First, the translucent resin sheets of each example and each comparative example were stored for 23 hours under the conditions of a temperature of 25°C and a humidity of 50% Rh.

Next, the moisture content (moisture content) A in the translucent resin sheet was measured using a moisture content measuring device ("AQUATRACK 3E" manufactured by ITSJAPAN CO., LTD.) for the translucent resin sheet stored under the above-described conditions.

Further, the size of A·B (1) was determined based on the obtained moisture content A and the total thickness B of the protective layers 3A and 3B provided in the translucent resin sheet.

### <B> Calculation of relational expression A·B (2)

First, the translucent resin sheets of each example and each comparative example were stored for 22 hours under conditions of a temperature of 35°C and a humidity of 20% Rh.

Next, the moisture content (moisture content) A in the translucent resin sheet was measured using a moisture content measuring device ("AQUATRACK 3E" manufactured by ITSJAPAN CO., LTD.) for the translucent resin sheet stored under the above-described conditions.

Further, the size of A·B (2) was obtained based on the obtained moisture content A and the total thickness B of the protective layers 3A and 3B provided in the translucent resin sheet.

### <C> Evaluation of bending test

First, the translucent resin sheets of each example and each comparative example were punched out to obtain a test piece having a size of 5 cm square, and then the test piece was heated to 140°C and subjected to thermal bending working to form a curved state having a curvature radius of 80 mm. Further, the formation of the test piece in this curved state was performed 20 times for the translucent resin sheets of each example and each comparative example, and the appearance of each test piece was visually observed to confirm the presence or absence of cracks in the test piece.

### <D> Evaluation of heat resistance test

In the translucent resin sheets of each example and each comparative example, a color change (ΔE) after storage for 1000 hours under conditions of a temperature of 105°C and a humidity of 0% Rh was calculated based on color values (L*a*b*) measured before and after storage using a D65 light source at a viewing angle of 2° in conformity with ISO 11664-4 (JIS Z 8781-4).

The evaluation results of the translucent resin sheets of each example and each comparative example obtained as described above are listed in Table 1.

### [Table 1]

**Table 1**

| | | | Example | | | | | | | | | | Comparative Example | |
|---|---|---|---|---|---|---|---|---|---|---|---|---|---|---|
| | | | 1 | 2 | 3 | 4 | 5 | 6 | 7 | 8 | 9 | 10 | 1 | 2 |
| Translucent resin sheet | Protective layer 3A | Protective film 1 (PC, thickness: 0.325 mm) | ○ | ○ | | | | ○ | ○ | | | ○ | ○ | ○ |
| | | Protective film 2 (PC, thickness: 0.250 mm) | | | ○ | ○ | | | | | | | | |
| | | Protective film 3 (PC, thickness: 0.125 mm) | | | | | ○ | | | | | | | |
| | | Protective film 4A (PC, thickness: 0.400 mm) | | | | | | | | ○ | | | | |
| | | Protective film 5 (TAC, thickness: 0.080 mm) | | | | | | | | | ○ | | | |
| | Protective layer 2 | Drying conditions 1 (80°C, 0% Rh, 5 minutes) | ○ | ○ | ○ | ○ | ○ | | | ○ | ○ | | | |
| | | Drying conditions 2 (80°C, 0% Rh, 20 minutes) | | | | | | ○ | | | | | | |
| | | Drying conditions 3 (80°C, 0% Rh, 2 minutes) | | | | | | | ○ | | | | | |
| | | Drying conditions 4 (90°C, 0% Rh, 60 minutes) | | | | | | | | | | | ○ | |
| | | Drying conditions 5 (40°C, 50% Rh, 2 hours) | | | | | | | | | | | | ○ |
| | Protective layer 3B | Protective film 1 (PC, thickness: 0.325 mm) | ○ | | | | | ○ | ○ | | | ○ | ○ | ○ |
| | | Protective film 2 (PC, thickness: 0.250 mm) | | ○ | ○ | | | | | | | | | |
| | | Protective film 3 (PC, thickness: 0.125 mm) | | | | ○ | ○ | | | | | | | |
| | | Protective film 4B (PA, thickness: 0.200 mm) | | | | | | | | ○ | | | | |
| | | Protective film 5 (TAC, thickness: 0.080 mm) | | | | | | | | | ○ | | | |
| | Total thickness B of protective layers 3A and 3B [mm] | | 0.650 | 0.575 | 0.500 | 0.375 | 0.250 | 0.650 | 0.650 | 0.600 | 0.160 | 0.650 | 0.650 | 0.650 |
| | Total thickness of translucent resin sheet [mm] | | 0.700 | 0.625 | 0.550 | 0.425 | 0.300 | 0.700 | 0.700 | 0.650 | 0.210 | 0.700 | 0.700 | 0.700 |
| Evaluation | Content A of moisture in translucent resin sheet [%] | storage conditions (1) (25°C, 50% Rh, 23 hours) | 0.553 | 0.610 | 0.655 | 0.738 | 0.963 | 0.320 | 0.770 | 0.670 | 1.345 | 0.849 | 0.100 | 1.341 |
| | | Storage conditions (2) (35°C, 20% Rh, 22 hours) | 0.401 | 0.470 | 0.496 | 0.555 | 0.733 | 0.171 | 0.577 | 0.524 | 1.018 | 0.625 | 0.057 | 0.771 |
| | Relational Expression A·B [%·mm] | Relational Expression A·B (1) (25°C, 50% Rh, 23 hours) | 0.36 | 0.35 | 0.33 | 0.28 | 0.24 | 0.21 | 0.50 | 0.40 | 0.22 | 0.55 | 0.07 | 0.87 |
| | | Relational Expression A·B (2) (35°C, 20% Rh, 22 hours) | 0.26 | 0.27 | 0.25 | 0.21 | 0.18 | 0.11 | 0.38 | 0.31 | 0.16 | 0.41 | 0.04 | 0.50 |
| | Bending test | Occurrence of cracks | 2/20 | 2/20 | 2/20 | 3/20 | 3/20 | 12/20 | 1/20 | 3/20 | 4/20 | 0/20 | 20/20 | 0/20 |
| | Heat resistance test | Color change (ΔE) | 10.20 | 9. 98 | 10.13 | 10.45 | 10.51 | 7.41 | 11.44 | 10.91 | 10.98 | 12.30 | 5.71 | 14.62 |

As listed in Table 1, in the translucent resin sheet in each example, the relational expression A·B (1) [mm·%] satisfied the relationship of 0.20 ≤ A·B (1) ≤ 0.70. As a result, even in a case where the translucent resin sheet was formed in a curved shape, the occurrence of cracks in the translucent resin sheet could be accurately suppressed or prevented, and even in a case where the translucent resin sheet was exposed to a high temperature, the occurrence of discoloration in the translucent resin sheet could be accurately suppressed or prevented.

On the contrary, in the translucent resin sheet of Comparative Example 1, the relational expression A·B (1) [mm·%] was less than 0.20, and did not satisfy the relationship of 0.20 ≤ A·B (1) ≤ 0.70. As a result, in a case where the translucent resin sheet was formed in a curved shape, cracks occurred in the translucent resin sheet. In addition, in the translucent resin sheet in Comparative Example 2, the relational expression A·B (1) [mm·%] was greater than 0.70 and did not satisfy the relationship of 0.20 ≤ A·B (1) ≤ 0.70, and as a result, in a case where the translucent resin sheet was exposed to a high temperature, discoloration was recognized in the translucent resin sheet.

### Industrial Applicability

According to the present invention, it is possible to provide a translucent resin sheet including a polarizing layer formed of a polarizer, and a protective layer provided on each of both surface sides of the polarizing layer and mainly formed of a resin material. In the present invention, in a case where a content of moisture in the translucent resin sheet is defined as A [%] and a total thickness of two protective layers provided on both surface sides of the polarizing layer is defined as B [mm], a relational expression A·B (1) [mm·%] of a product between the content A and the total thickness B in a case where the translucent resin sheet is stored for 23 hours under conditions of a temperature of 25°C and a humidity of 50% Rh satisfies a relationship of 0.20 ≤ A·B (1) ≤ 0.70. Therefore, for example, even in a case where a translucent resin sheet is punched out in accordance with the shape of the emission window provided in the housing of the projection type display device as a translucent cover member that transmits emitted light emitted from the projection type display device, and the translucent resin sheet is mounted in a curved state in accordance with the emission window, occurrence of cracks in the translucent resin sheet (translucent cover member) can be accurately suppressed or prevented. Further, even in a case where the projection type display device is exposed to a high temperature, such as a dashboard in summer, the translucent resin sheet (translucent cover member) can accurately suppress or prevent discoloration. Therefore, the emitted light transmitted through the translucent cover member can be reliably projected onto a screen in a designed tone. Accordingly, the present invention has industrial applicability.

### Reference Signs List

1: translucent cover member
**2:** polarizing layer
3A: protective layer
3B: protective layer
4A: bonding layer
4B: bonding layer
10: head-up display
11: display unit
12: reflective member
13: storage body
131: window portion
100: automobile
101: dashboard
102: windshield
102a: rear surface (inner surface)
H: driver
LS: display image

## Claims

1. A translucent resin sheet comprising:
a polarizing layer that is formed of a polarizer generating polarized light of light; and
a protective layer that is provided on each of both surface sides of the polarizing layer and is mainly formed of a resin material,
wherein in a case where a content of moisture in the translucent resin sheet is defined as A [%] and a total thickness of the two protective layers provided on both surface sides of the polarizing layer is defined as B [mm], a relational expression A·B (1) [mm·%] of a product between the content A and the total thickness B in a case where the translucent resin sheet is stored for 23 hours under conditions of a temperature of 25°C and a humidity of 50% Rh satisfies a relationship of 0.20 ≤ A·B (1) ≤ 0.70.

2. The translucent resin sheet according to Claim 1,
wherein a relational expression A·B (2) [mm·%_{]} of a product between the content A and the total thickness B in a case where the translucent resin sheet is stored for 22 hours under conditions of a temperature of 35°C and a humidity of 20% Rh satisfies a relationship of 0.10 ≤ A·B (2) ≤ 0.42.

3. The translucent resin sheet according to Claim 2,
wherein a color change of the translucent resin sheet measured in conformity with ISO 11664-4 after the translucent resin sheet is stored for 1000 hours under conditions of a temperature of 105°C and a humidity of 0% Rh is less than ΔE 13.5.

4. The translucent resin sheet according to Claim 1 or 3,
wherein the protective layer is a monolayer body mainly formed of the resin material, and
the resin material is a polycarbonate-based resin.

5. The translucent resin sheet according to Claim 1,
wherein the polarizing layer has a thickness of equal to or greater than 5 µm and equal to or less than 60 µm.

6. The translucent resin sheet according to Claim 1,
wherein the protective layer has a thickness of equal to or greater than 0.07 mm and equal to or less than 0.80 mm.

7. The translucent resin sheet according to Claim 1,
wherein the protective layer and the polarizing layer are bonded to each other via a bonding layer.

8. The translucent resin sheet according to Claim 7,
wherein the bonding layer has a thickness of equal to or greater than 0.005 mm and equal to or less than 0.04 mm.

9. The translucent resin sheet according to Claim 1,
wherein the translucent resin sheet is used as a translucent cover member that transmits emitted light emitted from a projection type display device.

10. A projection type display device comprising:
the translucent resin sheet according to Claim 9 as a translucent cover member capable of transmitting light.

11. A moving body comprising:
the projection type display device according to Claim 10.
